# EUROPEAN PATENT SPECIFICATION

(11) **EP 2 158 119 B1**
(45) Date of publication and mention of the grant of the patent: **15.02.2012**
(21) Application number: 08767168.1
(22) Date of filing: 26.05.2008
(51) Int. Cl.: B62D 33/02, B60P 7/12, B60P 3/41

(54) **DIVIDED TIMBER FRAME DESIGNED FOR MOUNTING OF TRUCK CHASSIS**
GETEILTER HOLZRAHMEN ZUR MONTAGE EINES LKW-CHASSIS
STRUCTURE EN BOIS DIVISÉE CONÇUE POUR LE MONTAGE D'UN CHÂSSIS DE CAMION

(30) Priority: 28.05.2007 SE 0701271
(43) Date of publication of application: 03.03.2010
(73) Proprietor: Erlandssons Industri AB, 973 41 Luleå (SE)
(72) Inventor: NORMAN, Peter, S-973 47 Luleå (SE)
(74) Representative: Holmberg, Nils Anders Patrik
(86) International application number: PCT/SE2008/050618
(87) International publication number: WO 2008/147318

(56) References cited:
- WO-A1-98/39174
- US-A- 4 174 118
- US-A- 5 993 126

## Description

### TECHNICAL FIELD

The invention refers to bodybuilding systems for mounting of truck chassis to timber truck.

### PRIOR ART

Vehicle producers of trucks manufacture and deliver trucks that typically are rebuilt by bodybuilders for special transport purposes, for example transport of timber. At mounting of timber frame a subframe or support frame is used. On the subframe various types of elements as timber bank brackets are attached. That kind of bodybuilding framework typically includes longitudinal beams having essentially the same length as the longitudinal frames on the chassis. SE 386113 shows an example of a subframe. A problem is that the subframe has a relatively high weight which reduces the possible payload. Further the subframe implies that the total frame gets an increased torsional rigidity compared to the frame on the truck delivered by the truck supplier which is not desirable for a timber truck that regularly is conveyed on uneven roads.

Some improvements have been made that reduces the problem of high weight, for example with removable timber banks for smaller trucks like the one in CA2282005, which makes it possible to reduce the weight when the truck is used for other purposes. But the problem with high weight still remains for timber trucks with the type of customary timber banks provided for attachment in the middle of one timber bank bracket provided transverse on the chassis. Further, in some countries, special requirements on the shape and strength of front fenders have to be fulfilled.

WO9839174 shows a mounting arrangement to mount a load bank on a frame beam. A mounting plate can be moved longitudinally along the frame beam to be secured in it. The load frame is intended for a truck with subframe integrated in the chassis.

The disclosure of said WO document covers the preamble features of claim 1.

An additional problem is that it is relatively resource demanding for a smaller company, such as e.g. a haulier, to rebuild a truck chassis to a timber truck. Therefore mounting of timber frame, including production of subframe, is often conveyed at an engineering workshop.

### OBJECT AND SUMMARY OF THE INVENTION

The object with the invention is to provide a divided timber frame intended for rebuilding of a truck chassis into a timber truck that has a lower weight than timber frames including subframe and implies simpler mounting than prior known timber frames. The divided timber frame is intended to be arranged directly on longitudinal beams in the truck chassis which means that a truck may be rebuilt to a timber truck without employing a subframe.

That kind of timber frame has two timber frame brackets which each include two longitudinal load distributing beams, each load distributing beam is considerably shorter than the length of the two longitudinal beams. The bottom sides of the load distributing beams are intended to be placed above the plane upper side on the longitudinal beams of the chassis. On each side of each load distributing beam are two attachment elements arranged. Each attachment element includes a number of holes with a hole pattern adapted to a hole pattern of one of the groups of module holes in the sides of the longitudinal beams. The module holes in the longitudinal beams are provided by the truck manufacturer so that bodybuilders may be able to adjust the truck for different purposes.

In one embodiment, the front fender includes at least two vertical beam resembling elements shaped of adjacent sheet metal parts which principally constitute a covering surface of the front fender. At least one sheet metal part at each beam resembling element has a bent edge in the vertical direction of the front fender, and together with an edge portion of an adjacent sheet metal part the bent edge constitutes one of the vertical beam resembling elements with the purpose of forming an energy absorbing zone.

The divided timber frame according to the invention, has a lower weight than prior known timber frames based on subframe, which increases the possible payload. The invention also involves reduced fuel consumption for a truck equipped with the divided timber frame, compared to a truck of the same type equipped with a prior known timber frame. In addition the amount of emitted carbon dioxide is reduced for a truck with a timber frame according to the invention.

A further advantage with the invention is that a truck adapted for timber transportation has a relatively twist-weak chassis compared to if it was equipped with prior known timber frames including a subframe. A twist-weak chassis is desirable for a truck adapted for transportation of timber when the chassis is exposed to turning forces during transport of timber on uneven forest roads.

The invention allows for production of the modules at a plant, transport to a smaller plant, such as e.g. a haulier, for relatively simple assemblage of the modules on a truck delivered by a truck manufacturer.

The modules may be shaped in different variants with regards to size and fastening devices such that a system, according to the invention, is adapted for a certain model of truck. The adaptation may be undertaken at a production plant for distribution to a large number of various assembly places where the front fender may be attached, by means of e.g. screw and nut, on the frame of one of a vehicle manufacturer delivered truck at an assemblage place that is remote from the production place.

### DESCRIPTION OF THE FIGURES

The invention is explained in greater detail with reference to the accompanying figures, where
Figure 1 shows an example of a front fender for a divided timber frame arranged two longitudinal beams on a truck chassis, without using subframe.
Figure 2 depicts a front fender seen from that side that is intended to be mounted facing against a driver's compartment.
Figure 3 is a side view of a front fender mounted on a truck chassis.
Figure 4 shows an example of an attachment element for the front fender, which has two groups of holes with a hole pattern adjusted to the hole pattern of two groups of holes on one of the longitudinal beams of the truck. The holes in the longitudinal beams are often denominated module holes and are made by the vehicle supplier that produced the truck.
Figure 5 shows an example of in the front fender furthest away lying sheet metal part.
Figure 6 shows an example of a sheet metal part adapted to form part of a beamlike vertical element.
Figure 7 shows an example of a truck with a timber frame according to the invention. The timber frame includes a front fender and two timber bank brackets provided directly on the chassis of the truck.
Figure 8 is a view of two timber bank brackets for a timber frame according to the invention.
Figure 9 is a module for attaching of rotation equipment intended to be mounted between the two longitudinal beams in the chassis.
Figure 10 is figure that shows a cross section of the module for attachment of rotational equipment.

### DESCRIPTION OF WORKING EXAMPLE

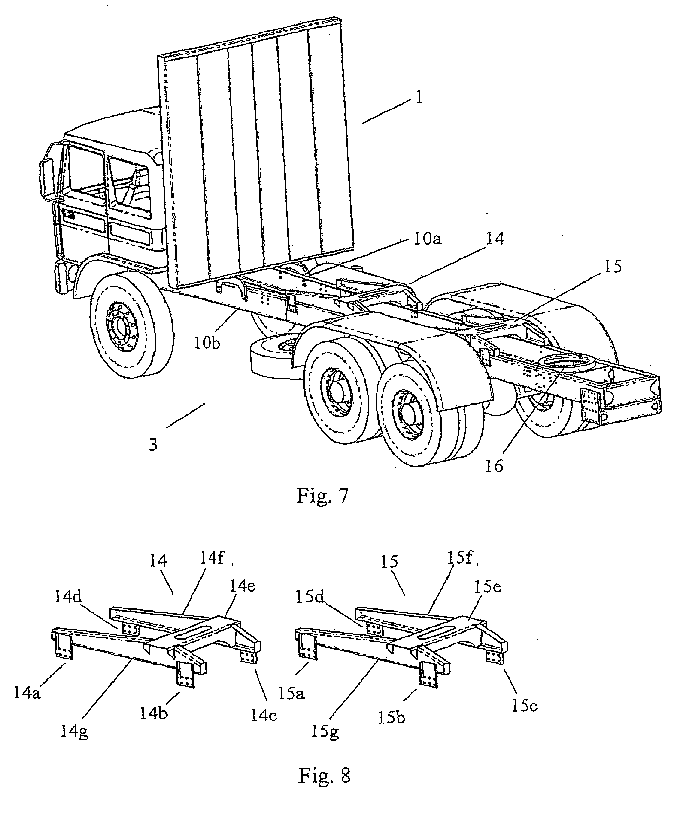

The truck in figure 7 is adapted for transport of timber and shows an example of a timber frame according to the invention. A timber frame according to the invention may be manufactured in variants adapted for specific truck models. Two timber bank brackets 14, 15 are arranged on the two longitudinal beams 10a, 10b on the chassis 3. The two timber bank brackets 14a, 14b and front fender 1 are made as separate modules. Vehicle manufacturers often deliver brand new trucks with module holes tapped in the longitudinal beams 10a, 10b on the chassis. The timber bank brackets 14a, 14b are shown in greater detail in figure 8. The timber bank brackets each include a transverse beam 14e, 15e with an attachment for timber bank. The attachment is of traditional type which is adapted to the model of timber bank that is intended to be used. The attachment for timber bank consists mainly of an oblong cavity which is exemplified in figure 8. The timber bank brackets 14, 15 each include two longitudinal beams 14f, 14g, 15f, 15g each considerably shorter than the length of the two longitudinal beams 10a, 10b on the chassis. It is to be compared with the subframes which have longitudinal beams with a length that, to a great extent, is the same as the length of the longitudinal beams in the chassis. By that, a truck with a timber frame, according to the invention, has a lower weight than a truck on which a subframe is used. At least part of the bottom side of the load distributing beams 14f, 14g, 15f, 15g are intended to be placed above the plane upper side on the longitudinal beams 10a, 10b of the chassis. The beams 14f, 14g, 15f, 15g may be provided directly on the longitudinal beams 10a, 10b. Alternatively, the beams 14f, 14g, 15f, 15g may be provided with a distance to the longitudinal beams 10a, 10b. In one embodiment, one or more cavities may exist between the load distributing beams 14f, 14g, 15f, 15g and the longitudinal beams 10a, 10b, for example, for further decreasing the weight. On each side of each unloading beam, two attaching elements are provided 14a, 14b, 14c, 14d, 15a, 15b, 15c, 15d, which are exemplified in figure 8. Each attaching element in figure 8 includes a plurality of holes with a hole pattern adapted to a hole pattern of one of the groups of module holes.

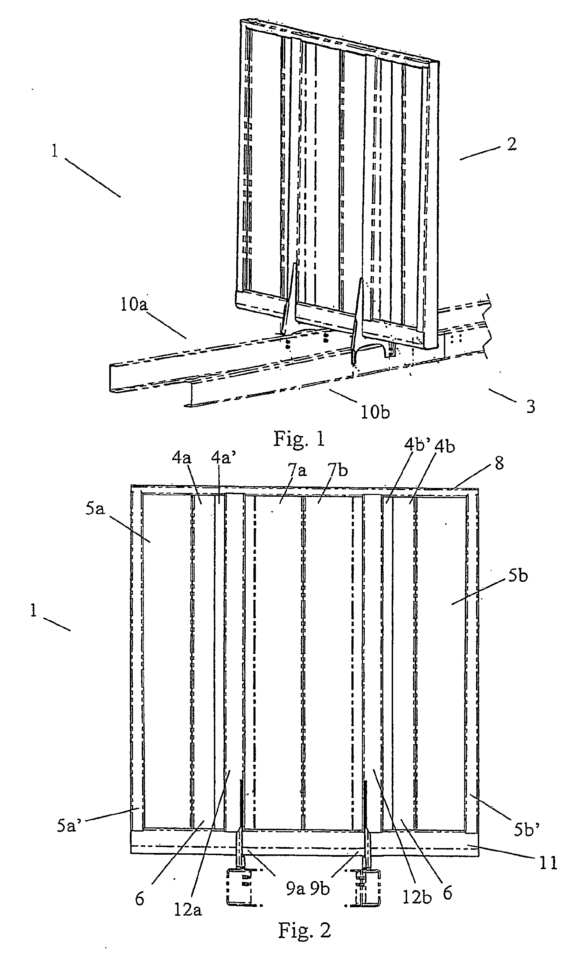

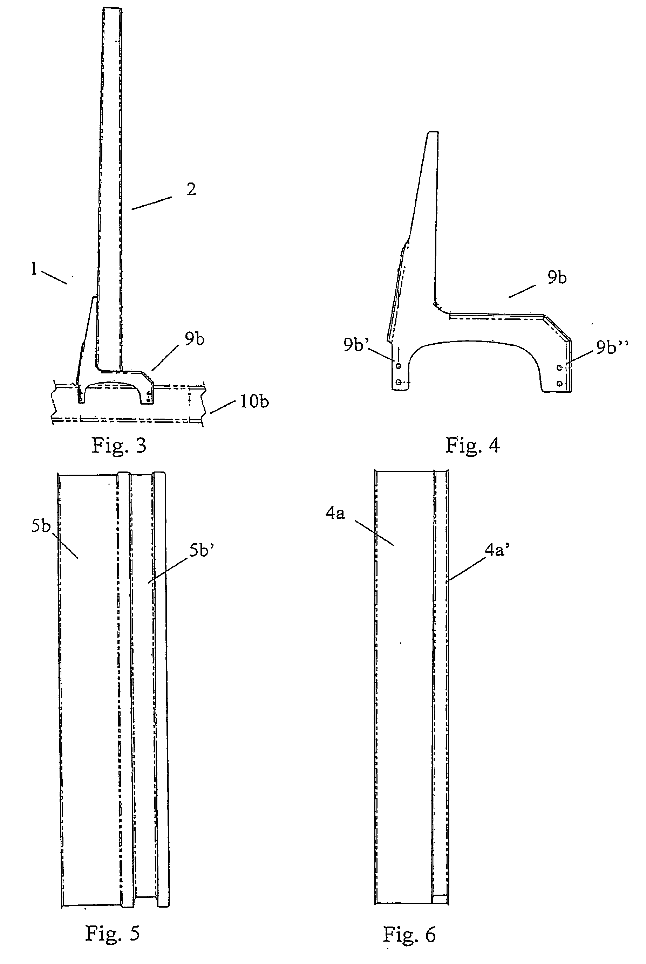

Figure 1 shows a front fender which is intended as load protection and includes a covering part 2 against which displaced load is intended to be catched up. The front fender 1 is intended to be placed on a truck chassis 3 behind the driver compartment. Figure 2 show that in one embodiment of the timber frame, the front fender 1 includes at least two metal parts 4a, 4b which are bent to form energy absorbing zones. The sheet metal parts typically have a length of 2600 - 2800 mm. The width is dependent on the number of sheet metal parts that form the covering part 2 of the front fender 1. The energy absorbing zones may be compared to beam resembling construction elements 4a', 4b' in a vertical direction compared to the ground-level plan when the front fender 1 is mounted on a truck. The beam resembling elements 4a', 4b' also have got a stabilizing function of the front fender 1. An alternative name of the beam resembling elements 4a', 4b' is column profiles. The sheet metal parts 4a, 4b in which at least parts of the beam resembling elements are bent 4a', 4b' also constitute a covering part of the front fender 1. At least one sheet metal part on each beam resembling section has got a bent edge, which forms part of the element. Example of profile on the first of the element 4a' is evident from figure 6. Other profiles are also possible. The profile of the second element 4b' is advantageously mirror-inverted in relation to the first one. In an embodiment, the beam resembling elements are stretched along a great extent of the whole height of the side of the front fender 1 that is intended to be mounted against the driver's compartment. At manufacturing of the front fender 1 the adjacent metal parts are typically joined by using a known welding method.

In order for the front fender 1 to have a lower weight than known front fenders, the sheet metal parts 4a, 4b that constitute the beam resembling elements 4a', 4b', and also part of the covering part of the front fender, can be cut out of a relatively thin sheet metal of high-tensile steel. High-tensile steel is a denomination known for the person skilled in the art. With that it is possible to make the sheet metal relatively thin. A suitable thickness of sheet metal is 1.5 mm. But sheet metal of another thickness 1 - 2 mm is also suitable. A suitable sheet metal has the classification S1500. Sheet metals with similar material properties are also possible to use.

Since the thickness of the sheet metal is relatively thin, it is an advantage if the covering part consists of at least 4 sheet metal parts, including the sheet metal parts that constitute the beam resembling elements 4a', 4b'.This is to reduce tendencies for oscillations in the sheet metal under operation of the truck. Oscillations may otherwise cause weakening of the material.

The edges of the two outer sheet metal parts 5a, 5b are in an embodiment bent and shaped as two stiffening elements 5a', 5b'. Figure 5 shows an example of such a bent metal part. An alternative denomination is side profiles. The two outer metal parts 5a, 5b also form a covering part of the left and right side respectively of the front fender 1 as is evident from figure 2. The thickness of the sheet metal and material in the outer sheet metal parts 4a, 4b are with advantage of the same thickness as the sheet metal parts that constitute the beam resembling elements.

According to one embodiment, the covering surface of the front fender consists of six sheet metal parts. The further sheet metal parts 7a, 7b may include bent edges to facilitate joining with adjacent sheet metal parts.

The front fender 1 includes, in an embodiment, an upper arm element 8 shaped of bent sheet metal. The thickness of the sheet metal and material in the outer metal parts are with advantage of the same thickness as the metal parts that constitute the beam resembling elements. An advantage with using the same type of sheet metal for, to a great extent, the whole front fender is that purchase, stock-keeping and material handling is facilitated at manufacturing of the front fender.

The attaching elements 9a, 9b to the front fender 1 are with advantage shaped as consoles and cut out from one metal part. In figure 3 is illustrated a side view of such an element is shown provided on the covering part of the front fender. The contact surface of the attaching elements 9a, 9b against the lower part of main body of the front fender 1 is advantageously L-shaped. Example of the profile of the attaching elements is evident from figure 4. In figure 4 the lower part of a attaching element 9b is shown including two groups of holes 9b', 9b" with a hole profile that corresponds to a hole profile of a group of holes on the side of one of the two longitudinal beams 10a, 10b of the truck. Corresponding groups of holes are included in the second attaching element 9a. By those means, the front fender 1 may be mounted with for example screws and nuts directly on the load bearing frame 3 of the truck. Any subframe or auxiliary frame is thereby not necessary. The two beam resembling elements 4a', 4b' are each adapted to be positioned opposite the upper part of each one attaching element. Thereby the beam resembling elements are intended to be placed in a position directly above the longitudinal beams 10a, 10b on the truck chassis 3. The attaching elements 9a, 9b may be delivered separately for mounting on the front fender. The same applies for the attaching elements for the timber bank brackets. In an embodiment, at least the lower part of the beam resembling elements 4a', 4b' provides a strengthening element 12a, 12b, which as shown in figure 2, are placed between each of the beam resembling elements 4a', 4b' and the inner upper part of the attaching elements 9a, 9b. The attaching elements 9a, 9b are typically shaped of sheet metal parts, of other type than high-tensile steel with good extension properties. This is because high-tensile steel has material properties which make yield point and flexural strength relatively close to each other. The upper part of the attaching elements 9a, 9b can be extended and bend when load strikes the covering part 2 of the front fender and energy is absorbed by the front fender 1.

The lower part of the covering part of the front fender may involve a longitudinal bent sheet metal element 11. Such a bent metal element 11 extends from an outer edge to the other outer edge of the covering part of the front fender. The bent element 11 forms a stabilizing element intended to prevent the lower part of the covered part of the front fender to twist when displaced load strikes the front fender 1. The longitudinal bent sheet metal element 11 encloses, on that side that is intended to be turned against the driver's compartment, the beam resembling elements 4a', 4b'. The sheet metal element is advantageously cut out of, or cut off, a sheet metal with a thickness of about 3 mm. The longitudinal metal element 11 is in this embodiment welded together with the lower part of the sheet metals in the covering part 2 of the front fender 1.

The covering part 2 of the front fender 1 is advantageously shaped so that the side, that is intended to be turned against the load, is mainly plain, with exception for joints between the metal parts. The front fender 1 is advantageously shaped so that the beam resembling elements 4a', 4b' are provided that side that is intended to be turned against the drivers compartment.

Variations of the front fender in terms of size and height, and variants of the attaching elements may occur, where a variant is adapted to a certain model of a truck.

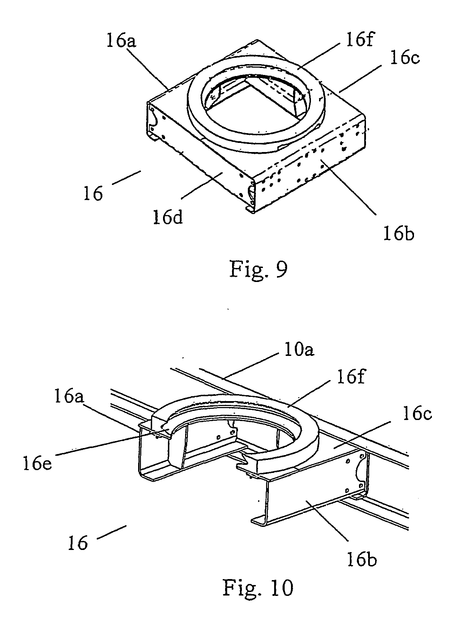

In an embodiment, the timber frame includes a further module, an example of the module is shown in figure 9 and 10, which is intended for mounting of rotation equipment. The rotation equipment is typically adapted for putting up and down a crane. The module 16 enables for the rotation equipment, which is provided the crane, to be turned such that the crane may be placed on the side or behind of the truck when putting on and off. The module 16 is arranged the rear part of the two longitudinal beams 10a, 10b. The module includes a ring shaped element with a plane upper side 16f. Against this plane upper side a corresponding surface on the rotation equipment may slide when it is put in position to load or unload the crane. Figure 10 further shows that the inner part of the ring shaped element has a shape 16e chamfered inwards. The inner chamfered shape may for example be v-shaped. This chamfering, or cavity, is intended for deadlocking of the rotation equipment. The rotation equipment may include a locking mechanism that includes four claw resembling gripping arms that at lowering in the ring shaped element are opened. When the rotation equipment is rotated so that a platform resembling part where the crane is located is in place in the longitudinal direction of the chassis, the claw resembling gripping arms may be locked against the chamfered part 16e of the ring shaped element.

In one embodiment, shown in figure 9 and 10, the module 16 for attaching of rotational equipment includes two longitudinal metal parts 16a, 16b and two longitudinal metal parts 16c, 16d where the two longitudinal metal parts are intended to be provided in the inner side of the two longitudinal 10a, 10b beams on chassis 3.

The invention is not limited to the above described exemplary embodiments, but may be varied in many ways within the scope of the accompanying patent claims.

## Claims

1. A timber frame for mounting on a truck chassis (3), which chassis has no subframe and includes two longitudinal beams (10a, 10b) with a plane upper side, the two longitudinal beams (10a, 10b) are provided with of a truck manufacturer provided module holes placed in groups on the side of each longitudinal beam (10a, 10b), the timber frame includes two timber frame brackets which each has got a transverse beam (14e, 15e) including an attachment for timber bank, the timber frame further includes a front fender, the timber bank brackets (14, 15) and the front fender (1) are made as separate modules,
**characterized in**
**that** the two timber bank brackets (14, 15) each include two longitudinal load distributing beams (14f, 14g, 15f, 15g), each load distributing beam is considerably shorter than the length of the two longitudinal beams (10a, 10b), the bottom side of the load distributing beams (14f, 14g, 15f, 15g) are intended to be placed above the plane upper side on the longitudinal beams (10a, 10b) of the chassis, on each side of each load distributing beam (14f, 14g, 15f, 15g), are two attaching elements provided (14a, 14b, 14c, 14d, 15a, 15b, 15c, 15d)
and each attaching element includes a number of holes with a hole pattern adapted to a hole pattern of one of the groups of module holes in the sides of the longitudinal beams (10a, 10b).

2. Timber frame according to claim 1 **characterized in that** the front fender (1) includes at least two vertical beam resembling element (4a', 4b'), shaped by adjacent sheet metal parts which mainly constitute part of a covering surface of the front fender (1), where at least one metal part (4a, 4b) at each beam resembling element (4a', 4b') has a bent edge in the vertical direction of the front fender (1), and together with an edge section of an adjacent metal part the bent edge constitutes one of the vertical beam resembling elements (4a', 4b') with the purpose of forming an energy absorbing zone.

3. Timber frame according to claim 2 **characterized in that** said metal part in the front fender (1) is manufactured of high-tensile steel.

4. Timber frame according to claim 1 or 3 **characterized in that** the front fender (1) includes two attaching elements (9a, 9b) shaped for attaching in the two longitudinal beams (10a, 10b) of the traction vehicle, the attaching elements (9a, 9b) are each cut out in one part, and the upper part of the attaching elements (9a, 9b) is provided with a welded seam on the lower part of the covering part (2) of the front fender (1).

5. Timber frame according to claim 4 **characterized in that** the lower part (9a, 9b) of each attaching element of the front fender (1) includes a front group (9b') and a rear group of holes (9b") with a hole profile that corresponds to a hole profile of corresponding groups of holes on the side of the two longitudinal beams (10a, 10b) of the truck.

6. Timber frame according to claim 5 **characterized in that** it includes a further module (16) which is intended for mounting of rotation equipment, the module is intended to be arranged in the rear par of the chassis between the both longitudinal beams (10a, 10b), the module includes a ring shaped element with a plane upper side (16f) dedicated as contact surface and load absorbing surface for rotation equipment, and that an inner part of the ring shaped element in its whole inner circumference has an inward chamfered shape (16e) intended for deadlocking of the rotation equipment.

7. Timber frame according to claim 6 **characterized in that** the module (16) for attaching of the rotation equipment includes two transverse metal parts (16a, 16b) and two longitudinal metal parts (16c, 16d), where the two longitudinal metal parts (16c, 16d) intends to be arranged on the inner side of the two longitudinal beams (10a, 10b) on the chassis.

## Patentansprüche

1. Schnittholzrahmen zur Montage auf einem Lkw-Fahrgestell (3), wobei das Fahrgestell keinen Hilfsrahmen hat und zwei Längsträger (10a, 10b) mit einer ebenen Oberseite aufweist, die beiden Längsträger (10a, 10b) mit Lkw-herstellerseitig vorgesehenen Modullöchern versehen sind, die in Gruppen auf der Seite jedes Längsträgers (10a, 10b) platziert sind, der Schnittholzrahmen zwei Schnittholzrahmenhalterungen aufweist, von denen jede einen Querträger (14e, 15e) mit einer Rungenstockbefestigung aufweist, der Schnittholzrahmen ferner einen Frontrammschmutz aufweist und die Rungenstockhalterungen (14, 15) und der Frontrammschutz (1) als getrennte Module hergestellt sind,
**dadurch gekennzeichnet, dass** die beiden Rungenstockhalterungen (14, 15) jeweils zwei Längslastverteilungsträger (14f, 14g, 15f, 15g) aufweisen, jeder Lastverteilungsträger erheblich kürzer als die Länge der beiden Längsträger (10a, 10b) ist, die Unterseiten der Lastverteilungsträger (14f, 14g, 15f, 15g) dazu bestimmt sind, auf der ebenen Oberseite der Längsträger (10a, 10b) des Fahrgestells platziert zu sein, auf jeder Seite jedes Lastverteilungsträgers (14f, 14g, 15f, 15g) zwei Befestigungselemente (14a, 14b, 14c, 14d, 15a, 15b, 15c, 15d) vorgesehen sind und
jedes Befestigungselement eine Anzahl von Löchern mit einem Lochmuster aufweist, das an ein Lochmuster einer der Gruppen von Modullöchern in den Seiten der Längsträger (10a, 10b) angepasst ist.

2. Schnittholzrahmen nach Anspruch 1, **dadurch gekennzeichnet, dass** der Frontrammschutz (1) mindestens zwei senkrechte trägerähnliche Elemente (4a', 4b') aufweist, die durch benachbarte Blechteile geformt sind, die hauptsächlich Teil einer Abdeckfläche des Frontrammschutzes (1) bilden, wobei mindestens ein Blechteil (4a, 4b) an jedem trägerähnlichen Element (4a', 4b') eine Abkantung in senkrechter Richtung des Frontrammschutzes (1) hat und gemeinsam mit einem Kantenteilstück eines benachbarten Blechteils der Abkantung eines der senkrechten trägerähnlichen Elemente (4a', 4b') zwecks Ausbildung einer Energie absorbierenden Zone bildet.

3. Schnittholzrahmen nach Anspruch 2, **dadurch gekennzeichnet, dass** das Blechteil im Frontrammschutz (1) aus hochzugfestem Stahl hergestellt ist.

4. Schnittholzrahmen nach Anspruch 1 oder 3, **dadurch gekennzeichnet, dass** der Frontrammschutz (1) zwei Befestigungselemente (9a, 9b) aufweist, die zum Befestigen in den beiden Längsträgern (10a, 10b) des Zugfahrzeugs geformt sind, die Befestigungselemente (9a, 9b) jeweils in einem Teil ausgeschnitten sind und das Oberteil der Befestigungselemente (9a, 9b) mit einer Schweißnaht auf dem Unterteil des Abdeckteils (2) des Frontrammschutzes (1) versehen ist.

5. Schnittholzrahmen nach Anspruch 4, **dadurch gekennzeichnet, dass** das Unterteil (9a, 9b) jedes Befestigungselements des Frontrammschutzes (1) eine vordere Gruppe (9b') und eine hintere Gruppe (9b") von Löchern mit einem Lochprofil aufweist, das einem Lochprofil entsprechender Gruppen von Löchern auf der Seite der beiden Längsträger (10a, 10b) des Lkw entspricht.

6. Schnittholzrahmen nach Anspruch 5, **dadurch gekennzeichnet, dass** er ein weiteres Modul (16) aufweist, das zur Montage von Drehtechnik bestimmt ist, das Modul dazu bestimmt ist, im hinteren Teil des Fahrgestells zwischen den beiden Längsträgern (10a, 10b) angeordnet zu sein, das Modul ein ringförmiges Element mit einer ebenen Oberseite (16f) aufweist, die als Kontaktfläche und Lastaufnahmefläche für Drehtechnik vorgegehen ist, und dass ein Innenteil des ringförmigen Elements in seinem gesamten Innenumfang eine einwärts abgefaste Form (16e) hat, die zum Verriegeln der Drehtechnik bestimmt ist.

7. Schnittholzrahmen nach Anspruch 6, **dadurch gekennzeichnet, dass** das Modul (16) zum Befestigen der Drehtechnik zwei Querblechteile (16a, 16b) und zwei Längsblechteile (16c, 16d) aufweist, wobei die beiden Längsblechteile (16c, 16d) dazu bestimmt sind, auf der Innenseite der beiden Längsträger (10a, 10b) auf dem Fahrgestell angeordnet zu sein.

## Revendications

1. Ossature en bois destinée à être montée sur un châssis de camion porteur (3), lequel châssis n'a pas d'ossature auxiliaire et comprend deux poutres longitudinales (10a, 10b) avec un côté supérieur plan, les deux poutres longitudinales (10a, 10b) sont fournies par un fabricant de camion, dotées de trous de module placés en groupes sur le côté de chaque poutre longitudinale (10a, 10b), l'ossature en bois comprend deux supports d'ossature en bois dont chacun a une poutre transversale (14e, 15e) comprenant une fixation pour un banc de bois, l'ossature en bois comprend en outre un écran de protection, les supports de banc de bois (14, 15) et l'écran de protection (1) sont réalisés sous forme de modules séparés,
**caractérisée en ce que** :
les deux supports de transport de banc de bois (14, 15) comprennent chacun deux poutres longitudinales de répartition de charge (14f, 14g, 15f, 15g), chaque poutre de répartition de charge est considérablement plus courte que la longueur des deux poutres longitudinales (10a, 10b), le côté inférieur des poutres de répartition de charge (14f, 14g, 15f, 15g) est prévu pour être placé au-dessus du côté supérieur plan sur les poutres longitudinales (10a, 10b) du châssis, de chaque côté de chaque poutre de répartition de charge (14f, 14g, 15f, 15g), on prévoit deux éléments de fixation (14a, 14b, 14c, 14d, 15a, 15b, 15c, 15d),
et chaque élément de fixation comprend un certain nombre de trous avec un modèle de trou adapté à un modèle de trou de l'un des groupes de trous de module dans les côtés des poutres longitudinales (10a, 10b).

2. Ossature en bois selon la revendication 1, **caractérisée en ce que** l'écran de protection (1) comprend au moins deux éléments ressemblant à une poutre verticale (4a', 4b'), formés par des parties de tôle adjacentes qui font principalement partie d'une surface de recouvrement de l'écran de protection avant (1), où au moins une partie métallique (4a, 4b) au niveau de chaque élément ressemblant à une poutre (4a', 4b') a un bord plié dans la direction verticale de l'écran de protection avant (1) et conjointement avec une section de bord d'une partie métallique adjacente, le bord plié constitue l'un des éléments ressemblant à une poutre verticale (4a', 4b') dans le but de former une zone d'absorption d'énergie.

3. Ossature en bois selon la revendication 2, **caractérisée en ce que** ladite partie métallique dans l'écran de protection avant (1) est fabriquée en acier à haute résistance à la traction.

4. Ossature en bois selon la revendication 1 ou 3, **caractérisée en ce que** l'écran de protection avant (1) comprend deux éléments de fixation (9a, 9b) formés pour se fixer dans les deux poutres longitudinales (10a, 10b) du véhicule tracteur, les éléments de fixation (9a, 9b) sont chacun découpé dans une partie, et la partie supérieure des éléments de fixation (9a, 9b) est prévue avec un cordon de soudure sur la partie inférieure de la partie de recouvrement (2) de l'écran de protection avant (1).

5. Ossature en bois selon la revendication 4, **caractérisée en ce que** la partie inférieure (9a, 9b) de chaque élément de fixation de l'écran de protection avant (1) comprend un groupe avant (9b') et un groupe arrière de trous (9b") avec un profil de trou qui correspond à un profil de trou des groupes correspondants de trous du côté des deux poutres longitudinales (10a, 10b) du camion.

6. Ossature en bois selon la revendication 5, **caractérisée en ce qu'**elle comprend un module supplémentaire (16) qui est prévu pour le montage d'équipement rotatif, le module est prévu pour être agencé dans la partie arrière du châssis entre les deux poutres longitudinales (10a, 10b), le module comprend un élément de forme annulaire avec un côté supérieur plan (16f) servant de surface de contact et de surface d'absorption de charge pour l'équipement rotatif, et **en ce qu'**une partie intérieure de l'élément de forme annulaire dans toute sa circonférence intérieure a une forme chanfreinée vers l'intérieur (16e) prévue pour bloquer l'équipement rotatif.

7. Ossature en bois selon la revendication 6, **caractérisée en ce que** le module (16) pour fixer l'équipement rotatif comprend deux parties métalliques transversales (16a, 16b) et deux parties métalliques longitudinales (16c, 16d), où les deux parties métalliques longitudinales (16c, 16d) sont prévues pour être agencées du côté intérieur des deux poutres longitudinales (10a, 10b) sur le châssis.
